# EUROPEAN PATENT APPLICATION

(11) **EP 4 601 070 A1**
(43) Date of publication of application: **13.08.2025**
(21) Application number: 23876616.6
(22) Date of filing: 08.10.2023
(51) Int. Cl.: H01M 10/42, H01M 4/13, H01M 10/0525

(54) **LITHIUM REPLENISHING ADDITIVE FOR POSITIVE ELECTRODE AND PREPARATION METHOD THEREFOR, LITHIUM-RICH POSITIVE ELECTRODE, AND SECONDARY BATTERY**

(30) Priority: 09.10.2022 CN 202211225960
(71) Applicant: Shenzhen Innovazone Technology Co., Ltd., Shenzhen, Guangdong 518000 (CN); Qujing Innovazone Technology Co., Ltd., Qujing, Yunnan 655000 (CN); Foshan Innovazone Technology Co., Ltd., Foshan, Guangdong 528000 (CN)
(72) Inventor: ZHONG, Zeqin, Shenzhen, Guangdong 518000 (CN); WAN, Yuanxin, Shenzhen, Guangdong 518000 (CN); KONG, Lingyong, Shenzhen, Guangdong 518000 (CN)
(74) Representative: Laine IP Oy
(86) International application number: PCT/CN2023/123383
(87) International publication number: WO 2024/078414

(57) **Abstract**

The present application relates to the technical field of material technology, more particularly to a cathode lithium-supplementing additive, a preparation method thereof, a lithium-rich cathode, and a secondary battery. The cathode lithium-supplementing additive includes: a lithium-rich iron-based material and a passivation material in situ bonded to an outer surface of the lithium-rich iron-based material; a chemical formula of the passivation material is aLi₂O·bFeₓO_{y}, 1≤x≤3, 1≤y≤4, 0.0001≤a≤0.01, 0.0001≤b≤0.01. The lithium-rich iron-based cathode lithium-supplementing additive of the present application has a good lithium-supplementing effect on the cathode material, and can timely supplement the loss of lithium ions in the material during the charge and discharge cycle. In addition, the passivation material can effectively prevent the interface from reacting with water and carbon dioxide in the environment to form excessive residual alkali, improve the moisture resistance and processing performance of the lithium-supplementing material, improve the cycle performance of the cathode material, and improve the cycle performance of the battery and service life.

## Description

The present application claims priority of the Chinese patent application filed with the China Patent Office on October 9, 2022 with an application number 202211225960.9 and titled "CATHODE LITHIUM-SUPPLEMENTING ADDITIVE, PREPARATION METHOD THEREOF, LITHIUM-RICH CATHODE, AND SECONDARY BATTERY", the entire contents of which are incorporated by reference in the present application.

### TECHNICAL FIELD

The present application relates to the technical field of material technology, more particularly to a cathode lithium-supplementing additive, a preparation method thereof, a lithium-rich cathode, and a secondary battery.

### BACKGROUND

Since being put on the market in 1991, lithium-ion batteries have been widely used in mobile communications, laptops, and other fields because of their advantages such as high operating voltage, long cycle life, high energy density and no memory effect. The energy density and cycle life of lithium-ion batteries are closely related to their initial coulombic efficiency and the formation of a solid electrolyte interface (SEI) film at the anode. During the initial charging process of lithium-ion batteries, the SEI film formed on the surface of the anode will convert a large amount of active lithium into lithium carbonate, lithium fluoride, and alkyl lithium, thereby causing lithium loss in the lithium-rich cathode. In a lithium-ion battery system using graphite as the anode, the initial charge will consume about 10% of the lithium source; when using high-capacity anode materials, such as alloys (silicon, tin, etc.), oxides (silicon oxide, tin oxide, etc.) and amorphous carbon as the anode, the consumption of cathode lithium source will be aggravated.

In traditional technology, the initial irreversible capacity loss of lithium batteries can be effectively compensated by adding lithium-supplementing materials to the lithium-rich cathode. However, in research and practical applications, it is found that the traditional cathode lithium-supplementing additive has the disadvantages of poor surface structural stability and high residual alkali value, which leads to the gelation phenomenon when the battery is homogenized. In addition, a large amount of gassing is easily generated during the charge and discharge process due to factors such as material phase change and heat generation, resulting in structural instability and triggering a series of side reactions. Therefore, it is urgent to develop a cathode lithium-supplementing additive with good processing performance and good lithium supplementation effect.

### TECHNICAL PROBLEMS

It is one of the purposes of embodiments of the present application to provide a cathode lithium-supplementing additive, a preparation method thereof, a lithium-rich cathode, and a secondary battery, aiming to solve the problems of poor structural stability and poor lithium-supplementing effect of traditional cathode lithium-supplementing additive to a certain extent.

### TECHNICAL SOLUTIONS

In order to solve the above technical problems, embodiments of the present application adopt the following technical solutions:
A first aspect provides a cathode lithium-supplementing additive. The cathode lithium-supplementing additive comprises: a lithium-rich iron-based material, and a passivation material in situ bonded to an outer surface of the lithium-rich iron-based material. A chemical formula of the passivation material is aLi₂O·bFeₓO_{y}, in which, 1≤x≤3, 1≤y≤4, 0.0001≤a≤0.01, and 0.0001≤b≤0.01.
A second aspect provides a preparation method of a cathode lithium-supplementing additive. The preparation method comprises the following steps:
   mixing an iron source, a lithium source, and a doped metal source according to an elemental stoichiometric ratio in a lithium-rich iron-based material, whereby obtaining a precursor;
   subjecting the precursor to a sintering treatment, whereby obtaining a lithium-rich iron-based material; and
   subjecting the lithium-rich iron-based material to a reduction treatment, whereby generating a passivation material in situ on an outer surface of the lithium-rich iron-based material; in which, a chemical formula of the passivation material is aLi₂O·bFeₓO_{y}, in which, 1≤x≤3, 1≤y≤4, 0.0001≤a≤0.01, and 0.0001≤b≤0.01.
A third aspect provides a lithium-rich cathode. The lithium-rich cathode comprises: a cathode active material, and the above cathode lithium-supplementing additive or a cathode lithium-supplementing additive prepared by the above preparation method.
A fourth aspect provides a secondary battery. The secondary battery comprises: a cathode, an anode, a separator, and an electrolyte, in which, the cathode comprises the above lithium-rich cathode.

Beneficial effects of the cathode lithium-supplementing additive provided in embodiments of the present application are summarized as follows: the cathode lithium-supplementing additive comprises a lithium-rich iron-based material, and a passivation material bonded to an outer surface of the lithium-rich iron-based material. A chemical formula of the passivation material is aLi₂O·bFeₓO_{y}. The passivation material is bonded to the outer surface of the lithium-rich iron-based material. Not only does the passivation material effectively prevent the interface of the lithium-rich iron-based material from reacting with water and carbon dioxide in the environment to form excessive residual alkali, thereby improving the moisture resistance and processing performance of the lithium-supplementing material, and improving the structural stability and performance stability of the cathode lithium-supplementing additive, thereby improving its lithium-supplementing effect on the cathode and improving the cycle performance of the battery; and but also the passivation material has little effect on the migration and transmission of carriers. In the passivation material, 0.0001≤a≤0.01, 0.0001≤b≤0.01, 1≤x≤3, 1≤y≤4, if a and b are too large, the reduction strength is too high, resulting in a decrease in the amount of active components, affecting the effective utilization rate of Li; if a and b are too low, the dense layer formed is limited and the protective effect is weakened; and if the x/y ratio is higher, it means that the more Fe is reduced, the more passivation materials are combined on the outer surface of the lithium-rich iron-based material 1. In addition, the lithium-rich iron-based material in the cathode lithium-supplementing additive has a good lithium-supplementing effect on the cathode material, which can timely supplement the loss of lithium ions in the material during the charge and discharge cycle, thereby improving the cycle performance of the cathode material and increasing the service life of the battery.

The beneficial effects of the preparation method of the cathode lithium-supplementing additive provided by embodiments of the present application are summarized as follows: the iron source, the lithium source, and the doped metal source are mixed according to an elemental stoichiometric ratio in the lithium-rich iron-based material, and then sintered to obtain the lithium-rich iron-based material. Then, the lithium-rich iron-based material is reduced, and by reducing a part of the lithium-rich iron-based material into oxides of iron and lithium, a dense passivation material can be generated in situ on the outer surface of the lithium-rich iron-based material. The chemical formula of the passivation material is aLi₂O·bFeₓO_{y}, in which, ≤x≤3,≤y≤4, 0.0001≤a≤0.01, and 0.0001≤b≤0.01. The preparation method of embodiments of the present application is simple in process, and the passivation material is formed in situ at the interface of the lithium-rich iron-based material, which can effectively prevent the interface from reacting with water and carbon dioxide in the environment to form excessive residual alkali, thereby improving the moisture resistance and processing performance of the lithium-supplementing material and improving the cycle performance of the battery.

The beneficial effects of the lithium-rich cathode provided in embodiments of the present application are summarized as follows: since the lithium-rich cathode comprises a cathode active material and the above-mentioned cathode lithium-supplementing additive. The cathode lithium-supplementing additive has good structural stability, good lithium-supplementing effect, good conductivity, when being doped in the cathode active material, can effectively supplement the lithium loss of the cathode during the operation of the battery, and the lithium-supplementing effect is long-lasting. Therefore, the lithium-rich cathode has good cycle stability and high energy density.

The beneficial effects of the secondary battery provided in embodiments of the present application are summarized as follows: the secondary battery comprises a cathode, an anode, a separator, and an electrolyte. Since the cathode comprises the above-mentioned lithium-rich cathode, and the lithium-rich cathode has the characteristics of good cycle stability and high energy density, the cycle performance and service life of the secondary battery is improved.

### DESCRIPTION OF THE DRAWINGS

In order to more clearly illustrate the specific implementation of the present application or the technical solution in the prior art, the drawings required to be used in the specific implementation or prior art description will be briefly introduced below. Obviously, the drawings in the following description are some implementations of the present application. For those skilled in the art, other drawings can also be obtained based on these drawings without creative work.
FIG. 1 is a schematic flow chart of a preparation method of a cathode lithium-supplementing additive provided in an embodiment of the present application; and
FIG. 2 is a schematic structural diagram of a cathode lithium-supplementing additive provided in an embodiment of the present application, in which, the following reference numerals are adopted: 1-lithium-rich iron-based material, 2-passivation layer, and 3-conductive layer.

### DETAILED DESCRIPTION OF THE EMBODIMENTS

To clarify the technical problems to be solved by the present application, technical solutions and beneficial effects, the present application is described in detail in conjunction with the embodiments below. It should be understood that the specific embodiments described herein are only used to explain the present application and are not used to limit the present application.

In the present application, the term "and/or" describes the association relationship of associated objects, indicating that there may be three relationships, for example, A and/or B, which may mean the following conditions: A exists alone, A and B exist simultaneously, and B exists alone. Among them, A and B can be singular or plural. The character "/" generally indicates that the contextual objects have an "or" relationship.

In the present application, "at least one" means one or more, and "multiple" means two or more. "At least one of the following" or similar expressions refers to any combination of these items, including any combination of single or plural items. For example, "at least one of a, b, or c", or "at least one of a, b, and c" can mean: a, b, c, a-b (that is, a and b), a-c, b-c, or a-b-c, in which, a, b, and c can be singular or plural.

It should be understood that in various embodiments of the present application, the sequence numbers of the above processes do not mean the order of execution, and some or all steps may be executed in parallel or sequentially, and the execution order of each process shall be determined based on its functions and internal logic and should not constitute any limitation to the implementation process of the embodiments of the present application.

Terms used in the embodiments of the present application are only for the purpose of describing specific embodiments, and are not intended to limit the present application. The singular forms "a", "said" and "the" used in the embodiments of the present application and the appended claims are also intended to include plural forms unless otherwise clearly indicated in the context.

The masses of the relevant components mentioned of the embodiments of the present application in the specification can not only refer to the specific contents of the component, but also represent the proportional relationship between the masses of the different components. The scaling up or down of the content of the fraction is within the scope disclosed the embodiments of the present application in the specification. Specifically, the mass described the embodiments of the present application in the specification may be µg, mg, g, kg and other well-known mass units in the chemical industry.

A first aspect of embodiments of the present application provides a cathode lithium-supplementing additive. The cathode lithium-supplementing additive comprises: a lithium-rich iron-based material 1, and a passivation material in situ bonded to an outer surface of the lithium-rich iron-based material 1. A chemical formula of the passivation material is aLi₂O·bFeₓO_{y}, in which, 1≤x≤3, 1≤y≤4, 0.0001≤a≤0.01, and 0.0001≤b≤0.01.

The cathode lithium-supplementing additive provided in the first aspect of embodiments of the present application comprises: a lithium-rich iron-based material 1, and a passivation material bonded to an outer surface of the lithium-rich iron-based material 1. A chemical formula of the passivation material is aLi₂O·bFeₓO_{y}. The passivation material is bonded to the outer surface of the lithium-rich iron-based material 1. Not only does the passivation material effectively prevent the interface of the lithium-rich iron-based material 1 from reacting with water and carbon dioxide in the environment to form excessive residual alkali, thereby improving the moisture resistance and processing performance of the lithium-supplementing material, and improving the structural stability and performance stability of the cathode lithium-supplementing additive, thereby improving its lithium-supplementing effect on the cathode and improving the cycle performance of the battery; and but also the passivation material has little effect on the migration and transmission of carriers. In the passivation material, 0.0001≤a≤0.01, 0.0001≤b≤0.01, 1≤x≤3, 1≤y≤4, if a and b are too large, the reduction strength is too high, resulting in a decrease in the amount of active components, affecting the effective utilization rate of Li; if a and b are too low, the dense layer formed is limited and the protective effect is weakened; and if the x/y ratio is higher, it means that the more Fe is reduced, the more passivation materials are combined on the outer surface of the lithium-rich iron-based material 1. In addition, the lithium-rich iron-based material in the cathode lithium-supplementing additive has a good lithium-supplementing effect on the cathode material, which can timely supplement the loss of lithium ions in the material during the charge and discharge cycle, thereby improving the cycle performance of the cathode material and increasing the service life of the battery.

In some embodiments, a chemical formula of the lithium-rich iron-based material 1 is Li_{c}Fe_{d}MₑO_{f}, in which, M is at least one metal element selected from Co, Ni, Mn, V, Cu, Mo, Al, Ti, Mg, Na, Ca, Zr, Si, Zn, Cr, and P, 1≤c≤6, 0 < d≤0.99, 0≤e≤0.1, and 1 < f < 4. Fe mainly plays a role in stabilizing the structure; the larger d is, the more the Li₅FeO₄ structure is dominant, and the better the structural stability is. The main function of M doped metal is to improve the bulk phase transmission of lithium ions, as well as to reduce the oxygen activity of oxygen released during charging and lithium deintercalation. The larger e is, the better the improvement effect on the bulk phase transmission of lithium ions. The larger c is, the more lithium ions can be deintercalated in practical applications, making the capacity of the lithium-rich iron-based material 1 higher.

In some embodiments, an average particle size of the lithium-rich iron-based material 1 is 100 nm to 50 µm. The lithium-rich iron-based material 1 of this particle size not only has a good lithium-supplementing effect, but also is conducive to the composite of the cathode lithium-supplementing additive and the cathode active material, thereby improving its lithium-supplementing effect. In some specific embodiments, the average particle size of the lithium-rich iron-based material 1 includes but is not limited to 100 nm to 1 µm, 1 µm to 10µm, 10 µm to 20 µm, 20 µm to 30 µm, 30 µm to 40 µm, 40 µm to 50 µm, etc.

In some embodiments, a valence state of iron ions in the passivation material is lower than a valence state of iron ions in the lithium-rich iron-based material 1. Compared with the lithium-rich iron-based material 1, the passivation material with iron ions in lower valence state has better stability, plays a passivation effect, prevents the interface of the lithium-rich iron-based material 1 from reacting with water and carbon dioxide in the environment to form excessive residual alkali, and improves the structural stability and performance stability of the cathode lithium-supplementing additive.

In some embodiments, the passivation material can be directly obtained by reducing the lithium-rich iron-based material 1. In this case, the low valence state of the iron ions in the passivation material is a corresponding reduced valence state of the iron ions in the lithium-rich iron-based material 1. By adjusting the reduction conditions of the lithium-rich iron-based material 1, the amount of the passivation material generated by the reduction can be flexibly controlled, thereby regulating the binding effect of the passivation material on the surface of the lithium-rich iron-based material 1. Not only can the surface of the lithium-rich iron-based material be reduced to form a portion of the passivation material, but also the passivation material generated by reduction can form a complete coating layer on the surface of the lithium-rich iron-based material 1. In other embodiments, the passivation material containing iron ions in low valence state can be directly mixed with the lithium-rich iron-based material 1 and, after a high-temperature reaction, directly coated on the outer surface of the lithium-rich iron-based material 1.

In some embodiments, the passivation material 1 is coated on the outer surface of the lithium-rich iron-based material 1 to form a passivation layer 2. The passivation material forms a dense and uniform coated passivation layer 2 on the outer surface of the lithium-rich iron-based material 1, which can more effectively prevent the interface of the lithium-rich iron-based material 1 from reacting with water and carbon dioxide in the environment to form excessive residual alkali, better improve the moisture resistance and processing performance of the lithium-supplementing material, improve the structural stability and performance stability of the cathode lithium-supplementing additive, and thus improve its lithium-supplementing effect on the cathode and improve the cycle performance of the battery.

In some embodiments, in the passivation layer 2, the passivation material alone forms a continuous and dense coating layer. The passivation effect is good, and the structural stability and performance stability of the cathode lithium-supplementing additive can be significantly improved.

In other embodiments, in the passivation layer 2, the passivation material is doped in other coating materials to collectively form a dense coating layer. In the passivation layer 2, the passivation material is doped with a carbon material to form the dense coating layer. By doping carbon material and other materials in the passivation material of the passivation layer 2, the passivation layer 2 has a good passivation effect and can improve the conductivity of the passivation material.

In some embodiments, in the passivation layer 2, a concentration of iron ions in a lower-valence state in the passivation layer increases from inside to outside in a radial direction. It can be understood that the lithium-rich iron-based material 1 can be reduced in a reducing atmosphere so that the passivation layer 2 is formed in situ on the outer surface of the lithium-rich iron-based material 1. In the passivation layer 2, the passivation material aLi₂O·bFeₓO_{y} is not evenly distributed, and the lithium-rich iron-based material 1 that is more fully in contact with the reducing atmosphere is more fully reduced. Therefore, from inside to outside in the radial direction, the content of the passivation material is increasingly enriched, that is, the concentration of iron ions in low valence state also increases, and the passivation layer 2 becomes denser. This embodiment can ensure the compactness of the passivation layer 2, the passivation effect on the material interface, and the stability of the material interface relative to the environment.

In some embodiments, an average thickness of the passivation layer 2 is 3 nm to 150 nm. This thickness can effectively avoid the generation of residual alkali, maintain the structural stability and performance stability of the lithium-rich iron-based material 1; and has little effect on the migration and transmission of carriers. If the average thickness of the passivation layer 2 is too high, the effective utilization rate of the active ingredients and lithium in the lithium-rich iron-based material 1 will be affected. If the average thickness of the passivation layer 2 is too low, it is not conducive to improving the structural stability and performance stability of the lithium-rich iron-based material 1. In some specific embodiments, the average thickness of the passivation layer 2 includes but is not limited to 3 nm to 10 nm, 10 nm to 15 nm, 15 nm to 20 nm, 20 nm to 25 nm, 25 nm to 30 nm, 30 nm to 40 nm, 40 nm to 50 nm, 50 nm to 80 nm, 80 nm to 100 nm, 100 nm to 120 nm, 120 nm to 150 nm, etc.

In some embodiments, the mass of the passivation material accounts for 0.01 wt% to 10 wt% of a total mass of the lithium-rich iron-based material 1 and the passivation material. The passivation material with this mass percentage in the cathode lithium-supplementing additive can not only effectively avoid the generation of residual alkali and maintain the structural stability and performance stability of the lithium-rich iron-based material 1, but also have little effect on the migration and transmission of carriers. If the content of the passivation material is too low, it cannot provide good protection; if the proportion of the passivation material is too high, the overall magnetism is strong and cannot be smoothly applied to a back-end battery. This ratio not only ensures the lithium-supplementing effect of the cathode lithium-supplementing additive, but also effectively maintains the structural stability and lithium-supplementing stability of the cathode lithium-supplementing additive, which is beneficial to improving the cycle performance of the cathode material and the battery. In some specific embodiments, the mass of the passivation material accounts for 0.01 wt% to 0.1 wt%, 0.1 wt% to 1 wt%, 1 wt% to 3 wt%, 3 wt% to 5 wt%, 5 wt% to 8 wt%, 8 wt% to 10 wt% of the total mass of the lithium-rich iron-based material 1 and the passivation material.

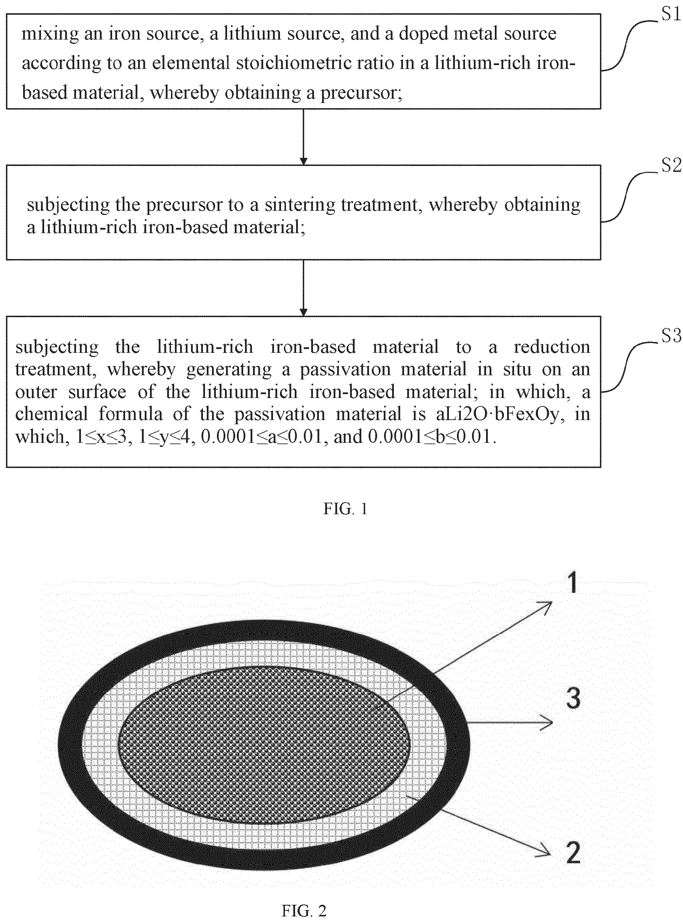

In some embodiments, the cathode lithium-supplementing additive further comprises a conductive layer 3 coated on an outer surface of the passivation layer 2. The conductive effect of the cathode lithium-supplementing additive is improved by coating the conductive layer 3 on the outside of the passivation layer 2. A structural schematic diagram of the cathode lithium-supplementing additive is shown in FIG. 2.

In some embodiments, the conductive layer 3 comprises at least one of a graphene, a carbon nanotube, a conductive carbon black, and a conductive graphite. These carbon materials have good conductive effects and can effectively improve the electron transmission efficiency of the cathode lithium-supplementing additive.

In some embodiments, an average thickness of the conductive layer 3 is 50 nm to 150 nm; for example, 60 nm to 120 nm, for example, 70 nm to 100 nm, and the thickness of the conductive layer 3 can effectively improve the electron transmission efficiency.

In some embodiments, in the cathode lithium-supplementing additive, a mass percentage of the conductive layer 3 is 0.5 wt% to 10 wt%. The mass percentage of the conductive layer 3 can effectively improve the electron transmission efficiency. If the mass percentage of the conductive layer 3 is too high, the content of the lithium-rich iron-based material 1 in the cathode lithium-supplementing additive is reduced, thereby affecting the lithium-supplementing effect; if the mass percentage of the conductive layer 3 is too low, the effect of improving the conductivity of the cathode lithium-supplementing additive is limited. In some specific embodiments, the mass percentage of the conductive layer 3 in the cathode lithium-supplementing additive includes but is not limited to 0.5-1 wt%, 1-2 wt%, 2-5 wt%, 5-8 wt%, 8-10 wt%, etc.

As shown in FIG. 1, a second aspect of embodiments of the present application provides a preparation method of a cathode lithium-supplementing additive. The preparation method comprises the following steps:
S10, mixing an iron source, a lithium source, and a doped metal source according to an elemental stoichiometric ratio in a lithium-rich iron-based material, whereby obtaining a precursor;
S20, subjecting the precursor to a sintering treatment, whereby obtaining a lithium-rich iron-based material; and
S30, subjecting the lithium-rich iron-based material to a reduction treatment, whereby generating a passivation material in situ on an outer surface of the lithium-rich iron-based material; in which, a chemical formula of the passivation material is aLi₂O·bFeₓO_{y}, in which, 1≤x≤3, 1≤y≤4, 0.0001≤a≤0.01, and 0.0001≤b≤0.01.

In the preparation method of the cathode lithium-supplementing additive provided by the second aspect of embodiments of the present application, the iron source, the lithium source, and the doped metal source are mixed according to an elemental stoichiometric ratio in the lithium-rich iron-based material 1, and then sintered to obtain the lithium-rich iron-based material 1. Then, the lithium-rich iron-based material 1 is reduced, and by reducing a part of the lithium-rich iron-based material 1 into oxides of iron and lithium, a dense passivation material can be generated in situ on the outer surface of the lithium-rich iron-based material 1. The chemical formula of the passivation material is aLi₂O·bFeₓO_{y}, in which, 1≤x≤3, 1≤y≤4, 0.0001≤a≤0.01, and 0.0001≤b≤0.01. The preparation method of embodiments of the present application is simple in process, and the passivation material is formed in situ at the interface of the lithium-rich iron-based material 1, which can effectively prevent the interface from reacting with water and carbon dioxide in the environment to form excessive residual alkali, thereby improving the moisture resistance and processing performance of the lithium-supplementing material and improving the cycle performance of the battery.

In some embodiments, in the above step S10, a chemical formula of the lithium-rich iron-based material 1 is Li_{c}Fe_{d}MₑO_{f}, in which, M is at least one metal element selected from Co, Ni, Mn, V, Cu, Mo, Al, Ti, Mg, Na, Ca, Zr, Si, Zn, Cr, and P, 1≤c≤6, 0 < d≤0.99, 0≤e≤0.1, and 1 < f < 4.

In some embodiments, the lithium source comprises at least one of lithium nitrate, lithium carbonate, lithium acetate, lithium oxalate, lithium borate, lithium phosphate, lithium chloride, lithium hydroxide, lithium peroxide, and lithium oxide.

In some embodiments, the iron source comprises an iron salt; which includes but not limited to iron chloride, iron sulfate, iron nitrate, iron phosphate, etc.

In some embodiments, the doped metal element source comprises at least one of a Co source, a Ni source, a Mn source, a V source, a Cu source, a Mo source, a Al source, a Ti source, a Mg source, a Na source, a Ca source, a Zr source, a Si source, a Zn source, a Cr source, and a P source. The form of the doped metal element source includes but is not limited to a chloride, a nitrate, a phosphate, a sulfate, etc.

The lithium source, iron source, and the doped metal element source used in the above embodiments of the present application all have good solubility, which is conducive to the preparation of lithium-rich iron-based material 1 by liquid phase sintering and other treatment methods.

In some embodiments, in the above step S20, the precursor is sintered by liquid phase sintering treatment. During the liquid phase sintering process, the liquid phase and the solid phase particles coexist. In such condition, the sintering temperature is higher than the melting point of the low-melting component or low-melting eutectic in the sintered body and lower than the melting point of the high-melting component. Since the liquid phase migration of the material is much faster than the solid phase diffusion, the densification rate and final density of the sintered body are greatly improved. The liquid phase sintering treatment comprises the following conditions: in an atmosphere with an oxygen concentration of 0 ppm to 1000 ppm, heating to a temperature of 350°C to 900°C at a heating rate of 100°C/hr to 400°C/hr and reacting for 10 hrs to 20 hrs. The heating rate, temperature condition, reaction time, etc. effectively ensure the reaction between various raw materials such as iron source, lithium source, and doped metal source, and various raw material components are sintered and reacted under high temperature conditions to generate lithium-rich iron-based material 1 in the form of particles.

In some embodiments, in the above step S30, conditions of the reduction treatment on the lithium-rich iron-based material 1 comprise: treating in a reducing atmosphere at a temperature of 350°C to 900°C for 0.1 hr to 8 hrs, so that the lithium-rich iron-based material 1 at the interface of the lithium-rich iron-based material 1 is partially reduced to lithium oxide and iron oxide, and a dense passivation material is formed at the lithium-rich lithium ferrate interface, thereby preventing the interface from reacting with water and carbon dioxide in the environment to form excessive residual alkali, thereby improving the moisture resistance and processing performance of the lithium-supplementing material, improving the stability of the cathode lithium-supplementing additive, improving its lithium-supplementing effect, and improving the cycle performance of the battery.

In some embodiments, the reducing atmosphere comprises at least one reducing gas selected from hydrogen, hydrocarbon gas, alcohol gas, ether gas, aldehyde gas, and ketone gas. These hydrogen or gaseous molecular hydrocarbons, alcohols, ethers, aldehydes, ketones, etc. used in the embodiments of the present application all have reducing properties, and can partially reduce, under certain temperature and atmosphere conditions, the lithium-rich iron-based material 1 at the interface of the lithium-rich iron-based material 1 into lithium oxide and iron oxide, so that a dense passivation material is formed at the lithium-rich lithium ferrate interface.

In some embodiments, in the reducing atmosphere, the volume percentage of the reducing gas is 0.5% to 60%. The reducing atmosphere can effectively ensure the reduction of the interface layer of the lithium-rich iron-based material 1, so that the lithium-rich iron-based material 1 at the interface of the lithium-rich iron-based material 1 is partially reduced to lithium oxide and iron oxide, and a dense passivation material is formed at the lithium-rich lithium ferrate interface. If the reducing gas content is too high, an excessively high reduction ratio of the lithium-rich iron-based material 1 is resulted, which reduces the proportion of the lithium-supplementing material in the cathode lithium-supplementing additive, and affects the lithium-supplementing effect. In some specific embodiments, in the reducing atmosphere, the volume percentage of the reducing gas includes but is not limited to 0.5% to 10%, 10% to 20%, 20% to 40%, 40% to 60%, etc.

In some embodiments, the generated passivation material forms a passivation layer 2 on the outer surface of the lithium-rich iron-based material 1.

In some embodiments, after the passivation layer 2 is generated, the following step is further included: S40, mixing the composite material comprising the lithium-rich iron-based material 1 and the passivation material with a conductive material, and heating to generate a conductive layer 3 in situ on a surface of the composite material. In the embodiment of the present application, the conductive layer 3 is prepared on the surface of the composite material to improve the conductivity of the cathode lithium-supplementing additive.

In some embodiments, the conductive material comprises at least one of a carbon source and a semi-carbonized carbon source. In some specific embodiments, the carbon source comprises: an organic carbon source and an inorganic carbon source. The organic carbon source comprises glucose, sucrose, etc., or other types of organic sugars. The organic carbon source is pyrolyzed and then coated on the surface of the passivation material to form a conductive carbon coating layer. Inorganic carbon sources comprise: graphene, conductive carbon fibers, carbon nanotubes, etc. In some embodiments, the carbon source comprises both an organic carbon source and an inorganic carbon source. During the pyrolysis of the organic carbon source, an inorganic carbon source with a better conductive effect is mixed, thereby reducing the carbon content of the conductive layer 3 and improving the conductive effect. In some embodiments, the semi-carbonized carbon source refers to a carbon source that is partially carbonized by high-temperature treatment of the carbon source in an inert atmosphere for a period of time, and active functional groups such as hydroxyl and carboxyl are formed on the surface of the semi-carbonized carbon source. These active functional groups can form better bonding with Fe-O in the composite material, and the bonding effect is better, thereby better improving the structural stability of the cathode lithium-supplementing additive.

In some embodiments, the conductive layer 3 comprises at least one of a graphene, a carbon nanotube, a conductive carbon black, and a conductive graphite.

In some embodiments, the heating treatment comprise is performed under the following conditions: heating in an inert atmosphere at a temperature of 300°C to 400°C for 2 hrs to 6 hrs, whereby allowing the conductive material to form a conductive coating layer on the surface of the composite material.

In some embodiments, in the cathode lithium-supplementing additive, a mass ratio of the lithium-rich iron-based material 1, the passivation material, and the conductive layer 3 is (93-99): (0.01-1): (0.5-8). The lithium-rich iron-based material 1 serves as the core and mainly provides capacity, If the ratio of the lithium-rich iron-based material 1 is too low, the active lithium that can be provided is low; and if the ratio of the ratio of the lithium-rich iron-based material 1 is too high, the passivation is insufficient, or the conductivity is insufficient, and the lithium deintercalation process cannot be completed well. If the ratio of the passivation material is too low, a good protection cannot be provided; and if the ratio of the passivation material is too high, the overall magnetism is strong and cannot be successfully applied to the back-end battery. If the ratio of the conductive layer 3 is too low, a complete conductivity cannot be provided, and if the ratio of the conductive layer 3 is too high, invalid mass is occupied. In the cathode lithium-supplementing additive, the ratio of lithium-rich iron-based material 1, passivation material and conductive layer 3 not only ensures the lithium-supplementing effect of the additive, but also can effectively maintain the structural stability and lithium-supplementing stability of the additive, and has good conductive effect, which is beneficial to improving the cycle performance of the cathode material and the battery.

In some embodiments, an average particle size of the lithium-rich iron-based material 1 is 100 nm to 50 µm. The lithium-rich iron-based material 1 of this particle size not only has a good lithium-supplementing effect, but also is conducive to the composite of the cathode lithium-supplementing additive and the cathode active material, thereby improving the lithium-supplementing effect thereof.

In some embodiments, an average thickness of the passivation layer 2 is 3 nm to 150 nm. This thickness can effectively avoid the generation of residual alkali, maintain the structural stability and performance stability of the lithium-rich iron-based material 1, and has little effect on the migration and transmission of carriers.

In some embodiments, an average thickness of the conductive layer 3 is 50 nm to 150 nm; for example, 60 nm to 120 nm, for example, 70 nm to 100 nm, and the thickness of the conductive layer 3 can effectively improve the electron transmission efficiency.

In a third aspect of embodiments of the present application, a lithium-rich cathode is provided, which comprises: a cathode active material, and the above-mentioned cathode lithium-supplementing additive or a cathode lithium-supplementing additive prepared by the above-mentioned preparation method.

The lithium-rich cathode provided in the third aspect of embodiments of the present application comprises a cathode active material and the above-mentioned cathode lithium-supplementing additive. The cathode lithium-supplementing additive has good structural stability, good lithium-supplementing effect, good conductivity, when being doped in the cathode active material, can effectively supplement the lithium loss of the cathode during the operation of the battery, and the lithium-supplementing effect is long-lasting. Therefore, the lithium-rich cathode has good cycle stability and high energy density.

In some embodiments, the cathode active material includes but is not limited to at least one of lithium nickel cobalt manganese, lithium nickel cobalt aluminum, lithium nickel manganese, lithium cobalt oxide, lithium iron phosphate, nickel cobalt manganese aluminum, etc.

In some embodiments, the lithium-rich cathode is mixed with a conductive agent, a binder, etc. in proportion to form a cathode slurry, which is coated on the surface of the cathode current collector, rolled, and dried to obtain a cathode plate.

In a fourth aspect of embodiments of the present application, a secondary battery is provided, which comprises: a cathode, an anode, a separator, and an electrolyte. The cathode comprises the above-mentioned lithium-rich cathode.

The secondary battery provided in the fourth aspect of embodiments of the present application comprises a cathode, an anode, a separator, and an electrolyte. Since the cathode comprises the above-mentioned lithium-rich cathode, and the lithium-rich cathode has the characteristics of good cycle stability and high energy density, the cycle performance and service life of the secondary battery is improved.

In some embodiments, the anode of the secondary battery includes but is not limited to carbon materials, such as graphite, soft carbon (such as coke), hard carbon, or nitrides, tin-based oxides, tin-based oxides, tin alloys, and nano-anode materials, etc.

In some embodiments, the separator comprises at least one material selected from polypropylene fiber, polyacrylonitrile fiber, polyvinyl formal fiber, poly(ethylene terephthalate), polyethylene terephthalate, polyamide fiber, and poly(p-phenylene terephthalamide).

In some embodiments, the electrolyte comprises an aqueous solution containing at least one soluble salt of Na+, K+, and NH4+.

In order to make the above implementation details and operations of the present application clearly understood by those skilled in the art, and to demonstrate the significant performance of the cathode lithium-supplementing additive and a preparation method thereof in embodiments of the present application, the above technical scheme is illustrated by multiple examples below.

### Example 1

A cathode lithium-supplementing additive, having a structure as shown in FIG. 2, comprises: a lithium-rich iron-based material 1 as a core, a passivation layer 2, and a conductive layer 3. A chemical formula of the core is Li_{4.975}Fe_{0.965}Al_{0.03}O_{3.98}, a chemical formula of the passivation material in the passivation layer 2 is 0.0125Li₂O·0.005FeO (x=1, y=1), a thickness of the passivation layer 2 is 20 nm, and a raw material of the conductive layer 3 is selected from a semi-finished carbon source containing hydroxyl groups.

The above cathode lithium-supplementing additive was prepared by the following steps:
① Preparation of lithium peroxide: hydrogen peroxide and anhydrous lithium hydroxide in a molar ratio of 1.1:1 were stirred and mixed, a reaction temperature was 100°C, and a reaction time was 30 min. Then, a quantitative amount of anhydrous ethanol was added to the reactor. A volume ratio of anhydrous ethanol to hydrogen peroxide was 1.2. Finally, a lithium peroxide precipitate with crystal water was obtained. Crystals were roasted at 420°C for 5 hrs to remove crystal water to obtain Li₂O₂.
② According to an elemental stoichiometric ratio in molecular formula Li₅Fe_{0.97}Al_{0.03}O₄, Fe(NO₃)₃, LiNO₃, Li₂O₂, and Al(NO₃)₃ at a molar ratio of 0.97:1:2:0.03 were provided for high-speed shear mixing to obtain a precursor.
③ In a nitrogen atmosphere, the precursor was transferred to a corundum sagger, in which, the precursor was heated to 850°C at a rate of 300°C/hr and maintained at such temperature for 15 hrs. After cooling, a product was mechanically crushed and graded to obtain a Li₅Fe_{0.97}Al_{0.03}O₄ lithium-containing core.
④ The above Li₅Fe_{0.97}Al_{0.03}O₄ was heated to 500°C at a rate of 100°C/hr, introduced with 5% H₂/N₂ and maintained at such temperature for 5 hrs, to obtain a powder of a core-shell structure with a core of Li_{4.975}Fe_{0.965}Al_{0.03}O_{3.98} and a passivation layer 2 of 0.0125Li₂O·0.005FeO.
⑤ Glucose was collected with a weight thereof being 20 wt% of the above powder, and the temperature was raised to 350°C in a nitrogen atmosphere and maintained at such temperature for 5 hrs to obtain a semi-carbonized carbon source, a surface of which contained hydroxyl groups.
⑥ In a nitrogen atmosphere, the core-shell structure powder and the semi-carbonized carbon source were fused at a fusion speed of 2000 rpm and a fusion time of 30 min; a conductive carbon coating layer was formed on the surface of the core-shell structure powder to obtain a cathode lithium-supplementing additive.

### Example 2

A cathode lithium-supplementing additive, having a structure as shown in FIG. 2, comprises: a lithium-rich iron-based material 1 as a core, a passivation layer 2, and a conductive layer 3. A chemical formula of the core is Li_{4.95}Fe_{0.96}Al_{0.03}O_{3.96}, a chemical formula of the passivation material in the passivation layer 2 is 0.025Li₂O·0.01FeO, a thickness of the passivation layer 2 is 25nm, and a raw material of the conductive layer 3 is selected from a semi-finished carbon source containing hydroxyl groups.

The difference between the preparation methods of this example and Example 1 was that the reducing atmosphere in step 4 was changed to 5% CO/N₂, while other steps remained the same.

### Example 3

A cathode lithium-supplementing additive, having a structure as shown in FIG. 2, comprises: a lithium-rich iron-based material 1 as a core, a passivation layer 2, and a conductive layer 3. A chemical formula of the core is Li_{4.985}Fe_{0.967}Al_{0.03}O_{3.988}, a chemical formula of the passivation material in the passivation layer 2 is 0.0075Li₂O·0.003FeO, a thickness of the passivation layer 2 is 4 nm, and a raw material of the conductive layer 3 is selected from a semi-finished carbon source containing hydroxyl groups.

The difference between the preparation methods of this example and Example 1 was that the reducing atmosphere in step 4 was changed to 5% SO/N₂, while other steps remained the same.

### Example 4

A cathode lithium-supplementing additive, having a structure as shown in FIG. 2, comprises: a lithium-rich iron-based material 1 as a core, a passivation layer 2, and a conductive layer 3. A chemical formula of the core is Li_{4.99}Fe_{0.966}Al_{0.03}O_{3.989}, a chemical formula of the passivation material in the passivation layer 2 is 0.01Li₂O·0.004FeO, a thickness of the passivation layer 2 is 8 nm, and a raw material of the conductive layer 3 is selected from a semi-finished carbon source containing hydroxyl groups.

The difference between the preparation methods of this example and Example 1 was that the reducing atmosphere in step 4 was changed to 5% H₂S/N₂, while other steps remained the same.

### Example 5

A cathode lithium-supplementing additive, having a structure as shown in FIG. 2, comprises: a lithium-rich iron-based material 1 as a core, a passivation layer 2, and a conductive layer 3. A chemical formula of the core is Li_{4.9625}Fe_{0.9325}Al_{0.03}O_{3.925}, a chemical formula of the passivation material in the passivation layer 2 is 0.0375Li₂O·0.015FeO, a thickness of the passivation layer 2 is 35 nm, and a raw material of the conductive layer 3 is selected from a semi-finished carbon source containing hydroxyl groups.

The difference between the preparation methods of this example and Example 1 was that the reducing atmosphere in step 4 was changed to 5% C₂H₂/N₂, while other steps remained the same.

### Example 6

A cathode lithium-supplementing additive comprises: a lithium-rich iron-based material 1 as a core, a passivation layer 2, and a conductive layer 3. A chemical formula of the core is Li_{4.975}Fe_{0.965}Al_{0.03}O_{3.98}, a chemical formula of the passivation material in the passivation layer 2 is 0.0125Li₂O·0.005FeO, and a thickness of the passivation layer 2 is 20 nm.

The difference between the preparation methods of this example and Example 1 was that the treatment in step 5 was skipped, while other steps remained the same.

### Comparative Example 1

A cathode lithium-supplementing additive comprises: a lithium-rich iron-based material 1 as a core, and a coated conductive layer 3. The chemical formula of the core is Li_{4.975}Fe_{0.965}Al_{0.03}O_{3.98}, and a raw material of the conductive layer 3 is selected from a semi-finished carbon source containing hydroxyl groups.

The difference between its preparation method and Example 1 was that: treatment in step 4 was skipped, while other steps remained the same.

### Comparative Example 2

A cathode lithium-supplementing additive comprises: a lithium-rich iron-based material 1 as a core, a passivation layer 2, and a conductive layer 3. A chemical formula of the core is Li_{4.975}Fe_{0.965}Al_{0.03}O_{3.98}, a chemical formula of the passivation material in the passivation layer 2 is Li₂CO₃, and a thickness of the passivation layer 2 is 50 nm, and a raw material of the conductive layer 3 is selected from a semi-finished carbon source containing hydroxyl groups.

The difference between the preparation methods of this example and Example 1 was that the gas introduced in step 4 was 1% CO₂/N₂, and in such condition, the passivation material formed was Li₂CO₃ passivation material; and a thickness was 50 nm.

In order to verify the progressiveness of the examples of the present application, the following performance tests were conducted on the examples and comparative examples:

### 1. Adsorption rate evaluation method:

① Under standard atmospheric pressure, a room humidity was controlled at 25°C and a relative humidity was controlled at 20% to 25%;
② 0.3 g to 0.5 g of a sample was taken out from a glove box, one sample was taken for each time, and after the test, a next sample was taken from the glove box;
③ a weighing bottle was placed in an analytical balance having an accuracy of one hundred thousandth, a hatch was closed, and data was reset to zero; and
④ 0.17 g to 0.19 g of the sample to be tested was collected and placed in a container, and the material was spread by a spoon to make a spread area as thin and uniform as possible to ensure that a test area does not affect the water absorption rate of the material, then the hatch was closed, a timer was turned on after stabilizing for 3 s to 5 s, and a mass weighted by the analytical balance was recorded as a value at 0 min. Next, the values at 5 mins, 10 mins, 15 mins, and 20 mins were recorded, respectively. An average absorption data at 10 mins to 20 mins were calculated, and the water absorption rate of the lithium-containing core containing the dense coating layer was calculated.
⑤ Lithium-containing cores with a dense coating layer and a water absorption rate of 0 ppm/s to 50ppm/s were selected as the cathode lithium-supplementing additive.

The test results were shown in Table 1 below:

**Table 1**

| Sample | Reducing atmosphere | Structure | Water absorption rate ppm/s | Relative humidity % |
|---|---|---|---|---|
| Example 1 | 5% H₂/N₂ | Core Li_{4.975}Fe_{0.965}Al_{0.03}O_{3.98}, | 0.9 | 30 |
| | | Passivation layer 0.0125 Li₂O·0.005FeO, | | |
| | | Carbon layer | | |
| Example 2 | 5% CO/N₂ | Core Li_{4.95}Fe_{0.96}Al_{0.03}O_{3.96}, | 5.8 | 30 |
| | | Passivation layer 0.025 Li₂O·0.01FeO, | | |
| | | Carbon layer | | |
| Example 3 | 5% SO/N₂ | Core Li_{4.985}Fe_{0.967}Al_{0.03}O_{3.988}, | 6.0 | 30 |
| | | Passivation layer 0.0075 Li₂O·0.003FeO, | | |
| | | Carbon layer | | |
| Example 4 | 5% H₂S/N₂ | Core Li_{4.99}Fe_{0.966}Al_{0.03}O_{3.989}, | 3.8 | 30 |
| | | Passivation layer 0.01 Li₂O·0.004FeO, | | |
| | | Carbon layer | | |
| Example 5 | 5% C₂H₂/N₂ | Core Li_{4.9625}Fe_{0.9325}Al_{0.03}O_{3.925}, | 8.1 | 30 |
| | | Passivation layer 0.0375 Li₂O·0.015FeO, | | |
| | | Carbon layer | | |
| Example 6 | 5% H₂/N₂ | Core Li_{4.975}Fe_{0.965}Al_{0.03}O_{3.98}, | 15 | 30 |
| | | Passivation layer 0.0125 Li₂O·0.005FeO | | |
| Comparative Example 1 | 5% H₂/N₂ | Core Li_{4.975}Fe_{0.965}Al_{0.03}O_{3.98}, | 78 | 30 |
| | | Carbon layer | | |
| Comparative Example 2 | 1% CO₂/N₂ | Core Li_{4.975}Fe_{0.965}Al_{0.03}O_{3.98}, Passivation layer Li₂CO₃, | 18 | 30 |
| | | Carbon layer | | |

It can be seen from the above test results that relative to Comparative Example 1 without a passivation layer 2 and Comparative Example 2 using a Li₂CO₃ passivation layer 2, the cathode lithium-supplementing additives prepared in Examples 1 to 6 of the present application, in which, the passivation layer 2 was formed by directly reducing the lithium-rich iron-based material 1 and the cathode lithium-supplementing additive was coated with a carbon layer, all exhibit lower water absorption under the same test conditions, thereby improving the stability of the cathode lithium-supplementing additives.

In addition, the passivation layer 2 formed on the surface of the cathode lithium-supplementing additive reduces the water absorption of the cathode lithium-supplementing additive, improves the interface stability of the cathode lithium-supplementing additive, and is conducive to blocking the contact of water/CO₂ in the air with the lithium-supplementing material, reducing the environmental loss of the lithium-supplementing material in the cathode lithium-supplementing additive, and fully ensuring the lithium-supplementing effect of the cathode lithium-supplementing additive on the cathode. Through the cathode lithium-supplementing additive, the cathode is fully and effectively supplemented with lithium, and the cycle performance of the cathode is improved.

### 2. Button battery evaluation method:

### A. Battery assembly:

① Cathode plate: the cathode lithium-supplementing additive prepared in each of the examples and the comparative examples were mixed with lithium cobalt oxide in a mass ratio of 5:95 to obtain a mixture, and the mixture was mixed with polyvinylidene fluoride and SP-Li in a mass ratio of 93:3:4 by ball milling to obtain a cathode slurry, and the cathode slurry was coated on the surface of aluminum foil, rolled, and vacuum dried overnight at 110°C to obtain a cathode plate;
② Anode: lithium metal plate;
③ Electrolyte: ethylene carbonate and ethyl methyl carbonate were mixed in a volume ratio of 3:7, and LiPF₆ was added to form an electrolyte, and the concentration of LiPF₆ was 1 mol/L;
④ Separator: polypropylene microporous separator.
⑤ Lithium-ion battery assembly: lithium-ion batteries were assembled in an inert atmosphere glove box in an order of lithium metal plate-separator-electrolyte-cathode plate. The lithium-ion batteries corresponding to the cathode lithium-supplementing additives in Examples 1 to 6 were batteries A1 to A6, and the lithium-ion batteries corresponding to the cathode lithium-supplementing additives in Comparative Examples 1 to 2 were batteries B1 to B2.

### B. Performance test:

① According to the preparation process of Examples A1 to A6 and Comparative Examples A1 to A2, the adhesion between the product and the sagger and the stability of the sagger were observed.
② The electrochemical properties of the lithium-ion batteries of Examples A1 to A6 and Comparative Examples A1 to A2 were tested. The test conditions were as follows: the assembled batteries were placed at room temperature for 24 hrs and then charged and discharged. The charge and discharge voltage was 2.7 Vto 4.3 V.

The test results are shown in Table 2 below:

**Table 2**

| Sample | Initial charge specific capacity at 0 hr (mAh/g) | Initial charge specific capacity at 24 hrs (mAh/g) |
|---|---|---|
| Example A1 | 658 | 657 |
| Example A2 | 698 | 652 |
| Example A3 | 629 | 627 |
| Example A4 | 649 | 639 |
| Example A5 | 668 | 653 |
| Example A6 | 624 | 550 |
| Comparative Example B1 | 389 | 69 |
| Comparative Example B2 | 569 | 126 |

It can be seen from the above test results that, compared with the comparative example B1 without a passivation layer and the comparative example B2 with a passivation layer formed by Li₂CO₃, the examples A1 to A6 of the present application adopt the cathode lithium-supplementing additive coated with a carbon layer after the passivation layer is formed by direct reduction treatment of the lithium-rich iron-based material, and the lithium-ion battery examples A1 to A5 show excellent initial charge specific capacity at 0 HR, and still show a high initial charge specific capacity after 24 hrs, indicating good battery stability. Since the carbon coating is not performed in Example A6, the initial charge specific capacity decreases after 24 hrs. However, since the cathode lithium-supplementing additive used in Comparative Example B1 has no passivation layer, and the cathode lithium-supplementing additive in Comparative Example B2 adopts the Li₂CO₃ passivation layer, these two comparative examples have significantly reduced initial charge specific capacities at 0 HR, and the initial charge specific capacities at 24 hrs decrease significantly.

The above are only optional examples of the present application and are not intended to limit the present application. For those skilled in the art, the present application may have various modifications and changes. Any modifications, equivalent substitutions, improvements, etc. made within the spirit and principles of the present application should be comprised in the scope of the claims of the present application.

## Claims

1. A cathode lithium-supplementing additive, **characterized in that** the cathode lithium-supplementing additive comprises:
a lithium-rich iron-based material, and a passivation material in situ bonded to an outer surface of the lithium-rich iron-based material;
wherein a chemical formula of the passivation material is aLi₂O·bFeₓO_{y}, in which, 1≤x≤3, 1≤y≤4, 0.0001≤a≤0.01, and 0.0001≤b≤0.01.

2. The cathode lithium-supplementing additive according to claim 1, wherein a chemical formula of the lithium-rich iron-based material is Li_{c}Fe_{d}MₑO_{f}, in which, M is at least one metal element selected from Co, Ni, Mn, V, Cu, Mo, Al, Ti, Mg, Na, Ca, Zr, Si, Zn, Cr, and P, 1≤c≤6, 0 < d≤0.99, 0≤e≤0.1, and 1 < f< 4.

3. The cathode lithium-supplementing additive according to claim 1, wherein a valence state of iron ions in the passivation material is lower than a valence state of iron ions in the lithium-rich iron-based material.

4. The cathode lithium-supplementing additive according to claim 1, wherein a mass of the passivation material accounts for 0.01 wt% to 10 wt% of a total mass of the lithium-rich iron-based material and the passivation material.

5. The cathode lithium-supplementing additive according to claim 3, wherein the passivation material is coated on the outer surface of the lithium-rich iron-based material to form a passivation layer.

6. The cathode lithium-supplementing additive according to claim 5, wherein in the passivation layer, the passivation material alone forms a continuous and dense coating layer.

7. The cathode lithium-supplementing additive according to claim 6, wherein a concentration of iron ions in a lower-valence state in the passivation layer increases from inside to outside in a radial direction.

8. The cathode lithium-supplementing additive according to claim 5, wherein in the passivation layer, the passivation material is doped to form a dense coating layer.

9. The cathode lithium-supplementing additive according to claim 8, wherein in the passivation layer, the passivation material is doped with a carbon material to form the dense coating layer.

10. The cathode lithium-supplementing additive according to any one of claims 1 to 9, wherein an average particle size of the lithium-rich iron-based material is 100 nm to 50 µm.

11. The cathode lithium-supplementing additive according to any one of claims 1 to 9, wherein an average thickness of the passivation layer is 3 nm to 150 nm.

12. The cathode lithium-supplementing additive according to any one of claims 1 to 9, wherein the cathode lithium-supplementing additive further comprises a conductive layer coated on an outer surface of the passivation layer.

13. The cathode lithium-supplementing additive according to claim 12, wherein the conductive layer comprises at least one of a graphene, a carbon nanotube, a conductive carbon black, and a conductive graphite.

14. The cathode lithium-supplementing additive according to claim 12, wherein an average thickness of the conductive layer is 50 nm to 150 nm.

15. The cathode lithium-supplementing additive according to claim 12, wherein in the cathode lithium-supplementing additive, a mass percentage of the conductive layer is 0.5 wt% to 10 wt%.

16. A preparation method of a cathode lithium-supplementing additive, **characterized by** comprising the following steps:
mixing an iron source, a lithium source, and a doped metal source according to an elemental stoichiometric ratio in a lithium-rich iron-based material, whereby obtaining a precursor;
subjecting the precursor to a sintering treatment, whereby obtaining a lithium-rich iron-based material; and
subjecting the lithium-rich iron-based material to a reduction treatment, whereby generating a passivation material in situ on an outer surface of the lithium-rich iron-based material; wherein a chemical formula of the passivation material is aLi₂O·bFeₓO_{y}, in which, 1≤x≤3, 1≤y≤4, 0.0001≤a≤0.01, and 0.0001≤b≤0.01.

17. The preparation method of the cathode lithium-supplementing additive according to claim 16, wherein a chemical formula of the lithium-rich iron-based material is Li_{c}Fe_{d}MₑO_{f}, in which, M is at least one metal element selected from Co, Ni, Mn, V, Cu, Mo, Al, Ti, Mg, Na, Ca, Zr, Si, Zn, Cr, and P, 1≤c≤6, 0 < d≤0.99, 0≤e≤0.1, and 1 <f<4.

18. The preparation method of the cathode lithium-supplementing additive according to claim 17, wherein
the sintering treatment adopts a liquid phase sintering treatment, which comprises the following conditions: in an atmosphere with an oxygen concentration of 0 ppm to 1000 ppm, heating to a temperature of 350°C to 900°C at a heating rate of 100°C/hr to 400°C/hr and reacting for 10 hrs to 20 hrs.

19. The preparation method of the cathode lithium-supplementing additive according to claim 17, wherein conditions of the reduction treatment comprise: treating in a reducing atmosphere at a temperature of 350°C to 900°C for 0.1 hr to 8 hrs.

20. A lithium-rich cathode, **characterized in that** the lithium-rich cathode comprises:
a cathode active material, and
the cathode lithium-supplementing additive according to any one of claims 1-15 or a cathode lithium-supplementing additive prepared by the preparation method according to any one of claims 16-19.

21. A secondary battery, **characterized in that** the secondary battery comprises: a cathode, an anode, a separator, and an electrolyte, wherein the cathode comprises the lithium-rich cathode according to claim 20.
